# EUROPÄISCHE PATENTSCHRIFT

(11) **EP 3 284 728 B1**
(45) Veröffentlichungstag und Bekanntmachung des Hinweises auf die Patenterteilung: **16.10.2019**
(21) Anmeldenummer: 17186184.2
(22) Anmeldetag: 14.08.2017
(51) Int. Cl.: C02F 9/00, B01D 61/14, B01D 61/16, B01D 61/02, C02F 1/20, C02F 1/32, C02F 1/42, C02F 1/44, C02F 1/469, C02F 1/78, C02F 103/02

(54) **VERFAHREN ZUR HERSTELLUNG VON PHARMAZEUTISCH NUTZBAREN WASSERN, NÄMLICH VON WASSER FÜR INJEKTIONSZWECKE (WFI) UND VORRICHTUNG ZUR DURCHFÜHRUNG DES VERFAHRENS**
PROCESS FOR THE PREPARATION OF PHARMACEUTICALLY USABLE WATERS, WHICH ARE WATERS FOR INJECTION AND DEVICE FOR CARRYING OUT THE PROCESS
PROCÉDÉ DE FABRICATION D'EAUX UTILES PHARMACEUTIQUEMENT COMME EAUX POUR INJECTIONS, ET DISPOSITIF DE MISE EN OEUVRE DUDIT PROCÉDÉ

(30) Priorität: 17.08.2016 DE 102016115253
(43) Veröffentlichungstag der Anmeldung: 21.02.2018
(73) Patentinhaber: Rücker, Thomas, 53619 Rheinbreitbach (DE); Letzner, Hans-Hermann, 53227 Bonn (DE)
(72) Erfinder: Rücker, Thomas, 53619 Rheinbreitbach (DE); Letzner, Hans-Hermann, 53227 Bonn (DE)
(74) Vertreter: Buse, Mentzel, Ludewig Patentanwaltskanzlei

(56) Entgegenhaltungen:
- US-A- 4 548 716
- US-A- 5 645 727
- US-A1- 2006 280 805
- US-A1- 2009 095 666

## Beschreibung

Die Erfindung betrifft ein Verfahren zur Herstellung von pharmazeutisch nutzbaren Wassern, insbesondere von Wasser für Injektionszwecke. An pharmazeutisch nutzbare Wässer werden hohe Anforderungen gestellt; insbesondere Wasser für Injektionszwecke (WFI) muss besonders strenge Anforderungen erfüllen. Diese Wasser müssen weitgehend frei von Ionen, Mikroorganismen, Bakterienendotoxinen und anderen Verunreinigungen sein. Um solche Wasser herzustellen wird Wasser in Trinkwasserqualität diversen Verfahren unterworfen, insbesondere einem mehrstufigen Destillationsverfahren. Dies ist energieaufwendig.

Die DE 196 23 999 C2 beschreibt ein Verfahren zur Aufbereitung von Kaltwasser mit Trinkwasserqualität mittels Umkehrosmose. Das durch Umkehrosmose entkalkte Wasser wird dann einem Nutzwassertank zugeführt und kann anschließend an einen oder mehrere Verbraucher weitergeleitet werden. Soll dieses Wasser für die Pharmaindustrie, insbesondere als WFI, verwendet werden, wird häufig noch eine Destillation durchgeführt.

Die DE 10 2006 060 592 B3 beschreibt ein Verfahren und eine Vorrichtung zur Entsalzung von Meerwasser mittels einer Umkehrosmose und einer Ultrafiltration sowie diverser Vorbehandlungen. Als Membran für die Ultrafiltration wird eine keramische Membran verwendet, welche mit Ozon beaufschlagt wird. Dieses Verfahren ist allerdings nicht dazu geeignet WFI herzustellen, denn das durch das Verfahren behandelte Wasser beinhaltet immer noch zu viele Ionen, die es beim WFI zu vermeiden gilt.

In der DE 199 12 109 A1 wird ein Verfahren zum Reinigen, Entkeimen und Anreichern von Wasser mit Sauerstoff beschrieben. Auch hier werden eine Ultrafiltration und eine Umkehrosmose eingesetzt. Auch dieses Verfahren ist nicht geeignet WFI herzustellen, da auch hier keine Verfahrensschritte vorgesehen sind, die weitere Ionen aus dem Wasser entfernen. Vielmehr wird dem Wasser noch Sauerstoff zugeführt, was für ein WFI nicht wünschenswert ist.

Die US 5,645,727 beschreibt ein Verfahren zur Herstellung von Reinwasser, wobei Wasser in Trinkwasserqualität wenigstens einer Umkehrosmose und einer Ultrafiltration unterzogen wird. Nach der Umkehrosmose wird das Wasser einer Deionisation unterzogen.

Andere Verfahren sehen eine Ultrafiltration vor, um WFI herzustellen. Schwierig bei der Durchführung einer Ultrafiltration ist es jedoch, das Modul, in dem die Ultrafiltration durchgeführt wird sowie die zugehörige semipermeablen Membran auch vor Mikroorganismen zu schützen, zu desinfizieren und diese Barriere als integer zu bezeichnen.

Aufgabe der Erfindung ist es daher, ein Verfahren zur Herstellung von pharmazeutisch nutzbaren Wassern, nämlich zur Herstellung von Wasser für Injektionszwecke (WFI) bereitzustellen, welches auf die kostspielige und aufwändige Destillation verzichtet und trotzdem dafür sorgt, dass die Anlage und insbesondere die Ultrafiltration desinfiziert werden kann und Mikroorganismen zerstört werden. Eine weitere Aufgabe der Erfindung ist es, eine Vorrichtung für die Durchführung des zuvor beschriebenen Verfahrens bereitzustellen. Diese Aufgaben werden durch die kennzeichnenden Merkmale der Ansprüche 1 und 11 gelöst, denen folgende besondere Bedeutung zukommt.

Zur Aufbereitung wird Wasser in Trinkwasserqualität verwendet, welches im Weiteren Speisewasser genannt werden wird. Das Speisewasser wird zunächst einer Umkehrosmose unterzogen. Vor der Umkehrosmose wird noch eine Vorbehandlung des Speisewassers durchgeführt, beispielsweise eine Enthärtung des Wassers durch einen Ionenaustauscher. Nach der wenigstens einen Umkehrosmose wird das Wasser einer Elektrodeionisation und danach wenigstens einer Ultrafiltration unterzogen. Durch die Elektrodeionisation wird die Anzahl der Ionen in dem Wasser weiter reduziert. Erfindungsgemäß wird die für die Ultrafiltration verwendete semipermeable Membran als keramische Membran ausgeführt. Derartige Membranen sind vorbekannt und zeichnen sich durch eine besonders gute Beständigkeit gegenüber PH-Werten von 0 bis 14, Temperaturen von bis zu 400°C und Drücken von bis zu 80 bar sowie Beständigkeit gegenüber verschiedenen chemischen Substanzen aus. Das Modul, in dem die Ultrafiltration durchgeführt wird, wird dauerhaft mit Ozon beaufschlagt. Dieses desinfiziert und tötet eventuell vorhandene Mikroorganismen. Die Verwendung von Ozon in der Ultrafiltration ist nur durch Verwendung der keramischen Membran möglich, da herkömmliche Membranen sonst durch das Ozon geschädigt werden könnten. Das Ozon erlaubt eine gute Desinfektion des aufbereiteten Wassers und kann aus dem Wasser entfernt werden. So können sich in dem Modul, in dem die Ultrafiltration stattfindet, keine Mikroorganismen ansammeln. Während der Produktion wird das mit Ozon beaufschlagte Wasser über die Ultrafiltration in den Vorratsbehälter geführt, wobei ein Teilstrom vor die Anlage in die Vorbehandlung des Speisewassers in eine Ringleitung zurück zirkuliert wird.

Eine Vorrichtung zur Durchführung des vorbeschriebenen Verfahrens umfasst eine Einrichtung zur Vorbehandlung, mindestens eine Umkehrosmose-Einrichtung sowie mindestens eine Ultrafiltrationseinrichtung, eine Elektrodeionisation sowie einen Vorratsbehälter und eine Ringleitung wobei die semipermeable Membran, welche zur Ultrafiltration Verwendung findet, eine keramische Membran und die Ultrafiltrationseinrichtung mit Ozon beaufschlagt ist.

Vor der Elektrodeionisation kann noch eine Membranentgasung vorgesehen sein. Diese dient dazu, gelöste Kohlensäure und/oder gelösten Sauerstoff aus dem Wasser zu entfernen.

Empfehlenswerterweise wird das Wasser vor der Durchführung der Umkehrosmose und/oder vor der durchzuführenden Vorbehandlung einer Bestrahlung durch ultraviolettes Licht unterzogen. Dieses UV-Licht, welches in einer UV-Einrichtung auf das Wasser abgegeben werden kann, zerstört das Ozon, so dass die nachfolgenden Bereiche der Vorrichtung ozonfreies Wasser führen. Dies ist bei den genannten Fällen notwendig, damit beispielsweise die semipermeable Membran der Umkehrosmose bzw. das Ionenaustauscherharz in einer Vorbehandlung nicht durch das Ozon geschädigt oder zerstört werden.

Nach der Ultrafitration wird das gereinigte Wasser dem Vorratsbehälter und der Ringleitung zugeführt. So kann das pharmazeutisch nutzbare Wasser entweder direkt verwendet werden oder zunächst in einem Vorratsbehälter zwischengespeichert werden. Sowohl der Vorratsbehälter als auch die Ringleitung sind zumindest bereichsweise mit Ozon beaufschlagt, um auch diese Bereiche sicher desinfizieren.

Die Anlage hat in einem besonders bevorzugten Ausführungsbeispiel zwei wesentliche Betriebszustände, nämlich die Produktion und die Bereitschaft. Während der Produktion wird das mit Ozon beaufschlagte Wasser über die Ultrafiltration in den Vorratsbehälter geführt, wobei ein Teilstrom vor die Anlage in die Vorbehandlung des Speisewassers zurück zirkuliert wird. Bei der Bereitschaft wird das hierfür vorgesehene Rohrleitungssystem genutzt, um das entsprechende Wasser mit Ozon beaufschlagt durch die ganze Anlage zu zirkulieren. Hierdurch können sich auch im Bereitschaftszustand keine Mikroorganismen in der Anlage ansiedeln.

Bei der Verwendung einer Ringleitung werden üblicherweise ein oder mehrere Entnahmestellen für das pharmazeutisch nutzbare Wasser vorgesehen, an welchen das Wasser entnommen und einem oder mehreren Produktionsprozessen, beispielsweise für Injektions- oder Infusionslösungen, zugeführt werden kann. Vor einer solchen Entnahmestelle ist ebenfalls wieder eine UV-Einrichtung vorgesehen, so dass das pharmazeutisch nutzbare Wasser mit ultraviolettem Licht bestrahlt wird, um das vorhandene Ozon zu zerstören. Dies geschieht, um den herzustellenden Lösungen kein Ozon beizufügen und dieses vor der Produktion von beispielsweise Injektions- bzw. Infusionslösungen restlos aus dem pharmazeutisch nutzbaren Wasser zu entfernen.

Während eines Produktionsstillstandes werden die Ringleitung und/oder der Vorratsbehälter vorzugsweise vollständig mit Ozon beaufschlagt, während die vor der Entnahmestelle befindliche UV-Einrichtung abgeschaltet wird, so dass das in der Ringleitung befindliche pharmazeutisch nutzbare Wasser ebenfalls komplett mit Ozon beaufschlagt ist. Das Wasser wird dann im Kreislauf gefahren, da dies eine gesetzliche Vorgabe ist. Das Ozon verhindert somit die Ansammlung von Mikroorganismen in der Ringleitung und desinfiziert diesen Bereich der Anlage vollständig.

Während des Produktionsstillstandes kann auch der Bereich der Anlage, vor der Ultrafiltration mit Ozon beaufschlagt werden, wobei jedoch dann die vor der Umkehrosmose befindliche UV-Einrichtung nicht abgeschaltet wird, da ansonsten durch das im Wasser befindliche Ozon die semipermeable Membran der Umkehrosmose beschädigt werden könnte. Auch das in diesem Teil der Anlage befindliche Wasser kann dann im Kreislauf gefahren werden.

Vorzugsweise ist nach der Ultrafiltration eine Probennahmestelle vorgesehen, an welcher die Bestimmung der Anzahl von Mikroorganismen in dem pharmazeutisch nutzbaren Wasser durchgeführt wird. Hierbei handelt es sich um eine schnelle Online-Bestimmung, welche quasi im laufenden Prozess durchgeführt werden kann. Hierdurch wird das ansonsten notwendige Anzüchten von Mikroorganismen über mehrere Tage sowie das visuelle Auszählen vermieden und die Bestimmung kann im laufenden Verfahren kontinuierlich durchgeführt werden. Steigt die Zahl der Mikroorganismen plötzlich an, kann die Produktion unterbrochen und die Fehlerquelle gesucht und behoben werden. Hierdurch ist es nicht notwendig, die mit dem pharmazeutisch nutzbaren Wasser hergestellten Produkte vor der Auslieferung zurückzuhalten, bis die Anzahl der Mikroorganismen bestimmt wurde bzw., falls doch eine Auslieferung stattfindet.

Schließlich umfasst die Erfindung noch eine Vorrichtung zur Durchführung des bereits beschriebenen Verfahrens zur Herstellung von pharmazeutisch nutzbaren Wassern. Die Vorrichtung weist wenigstens eine Umkehrosmose-Einrichtung und wenigstens eine Ultrafiltrationseinrichtung auf. Die Membran der Ultrafiltrationseinrichtung ist als keramische Membran ausgeführt. Hierdurch ist es möglich, die Ultrafiltration während des gesamten Produktionsprozesses mit Ozon zu beaufschlagen.

Weitere Vorteile und Ausführungsbeispiele ergeben sich aus den Unteransprüchen der nachfolgenden Beschreibung sowie der Zeichnung. In den Zeichnungen wird schematisch das erfindungsgemäße Verfahren anhand zweier Ausführungsbeispiele dargestellt. Es zeigen:
- Fig. 1:: ein schematischer Aufbau eines nicht zur Erfindung gehörenden Verfahrens
- Fig. 2:: ein schematischer Aufbau eines erfindungsgemäßen Verfahrens,
- Fig. 3:: Prozessdetails zu Umkehrosmose, Elektrodeionisation und Ultrafiltration des Verfahrens aus Fig. 2.

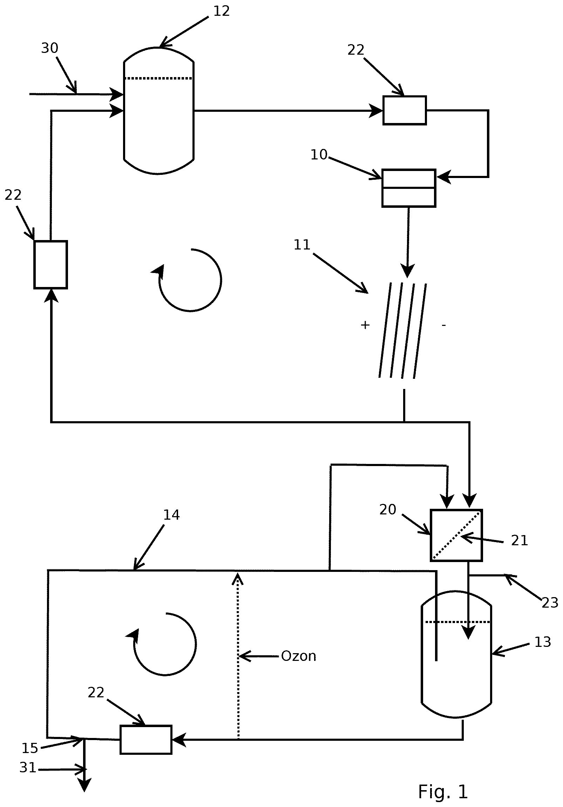

Fig. 1 zeigt schematisch den Ablauf eines nicht zur Erfindung gehörenden Verfahrens. Die Darstellung dient nur Anschauungszwecken, die Funktion der Bauteile entspricht denen der Erfindung. Pumpen, Ventile und sonstige derartige Einrichtungen wurden bewusst weggelassen, um die Darstellung übersichtlicher zu gestalten. Man erkennt, dass das Speisewasser 30, also das zugeführte Wasser in Trinkwasserqualität einer Vorbehandlung 12 unterzogen wird, beispielsweise durch einen Ionenaustauscher. Danach wird das Wasser durch eine UV-Einrichtung 22 einer Umkehrosmose 10 zugeführt. Das durch die Umkehrosmose 10 gereinigte Wasser wird dann über eine Elektrodeionisation 11 in die Ultrafiltration 20 geleitet. Bei dieser Ultrafiltration 20 wird das Wasser durch eine semipermeable Membran, nämlich die keramische Membran 21 geleitet und dann einem Vorratsbehälter 13 zugeführt. Zwischen der Ultrafiltration 20 und dem Vorratsbehälter 13 ist noch eine Probennahmestelle 23 vorgesehen, innerhalb welcher das gereinigte Wasser einer schnellen Detektion von Mikroorganismen zugeführt wird. Hierzu eignen sich RMC (Rapid-Microorganism-Control)-Verfahren. Aus dem Vorratsbehälter 13 durchläuft das gereinigte Wasser dann wieder eine UV-Einrichtung 22 und kann dann als pharmazeutisch nutzbares Wasser 31 an einer Entnahmestelle 15 einem oder mehreren Produktionsprozessen zugeführt werden.

Der Vorratsbehälter 13 bzw. die Ultrafiltration 20 sind dabei an eine Ringleitung 14 angeschlossen. Üblicherweise wird das pharmazeutisch nutzbare Wasser 31 auch während der Produktion immer durch die Ringleitung 14 zurück in den Vorratsbehälter 13 geführt. Hierbei wird dieser Bereich mit Ozon beaufschlagt, wie hier lediglich durch einen Pfeil angedeutet. Der gekrümmte Kreis im unteren Bereich deutet an, dass während eines Produktionsstillstandes das pharmazeutisch nutzbare Wasser 31 durch die Ringleitung 14 permanent im Kreis geführt wird, um einen Stillstand des Wassers 31 in der Ringleitung 14 zu vermeiden. In diesem Fall findet keine Entnahme des pharmazeutisch nutzbaren Wassers 31 an der Entnahmestelle 15 statt, da keine Produktion stattfindet. Die UV-Einrichtung 22 in der Ringleitung 14 wird dann ausgeschaltet, um das Ozon in dem Wasser 31 in der Ringleitung 14 nicht zu zerstören und so eine permanente Desinfektion der Ringleitung 14 und des gesamten Bereichs herbeizuführen.

Im oberen Bereich kann bei einem Produktionsstillstand das Wasser ebenfalls im Kreislauf geführt werden, wie der obere gebogene Pfeil andeutet. Dann durchläuft das Wasser die Vorhandlung 12, die UV-Einrichtung 22, die Umkehrosmose 10 sowie die Elektrodeionisation 11 und die weitere UV-Einrichtung 22 im Kreislauf. Die beiden UV-Einrichtungen 22 dieses oberen Kreislaufes werden jedoch nicht abgeschaltet, da ansonsten das Ionenaustauscherharz in der Vorbehandlung 12 bzw. die semipermeable Membran in der Umkehrosmose 10 durch das Ozon geschädigt werden könnten. Auch diesem oberen Kreislauf kann dann Ozon zugeführt werden, was hier jedoch nicht dargestellt ist.

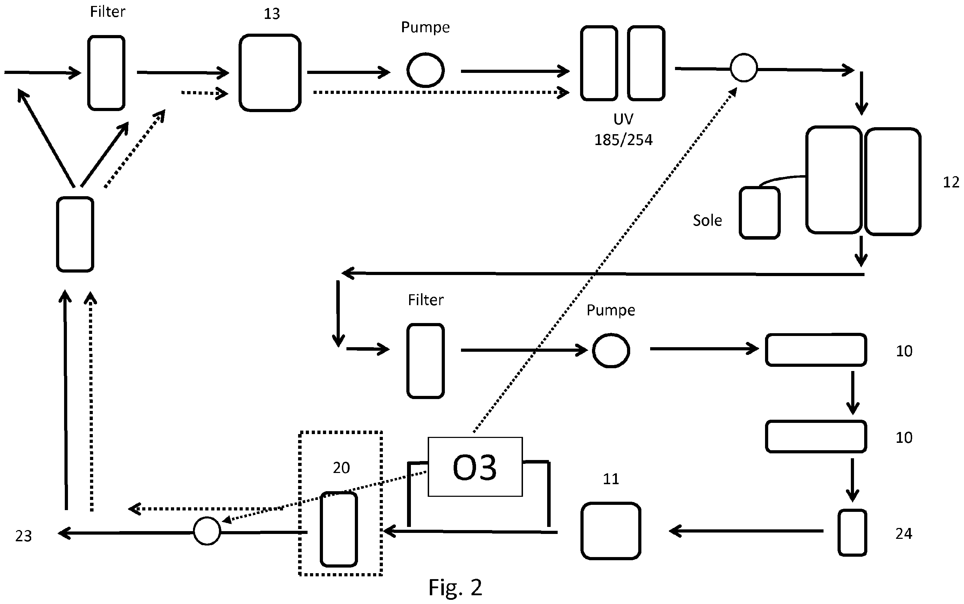

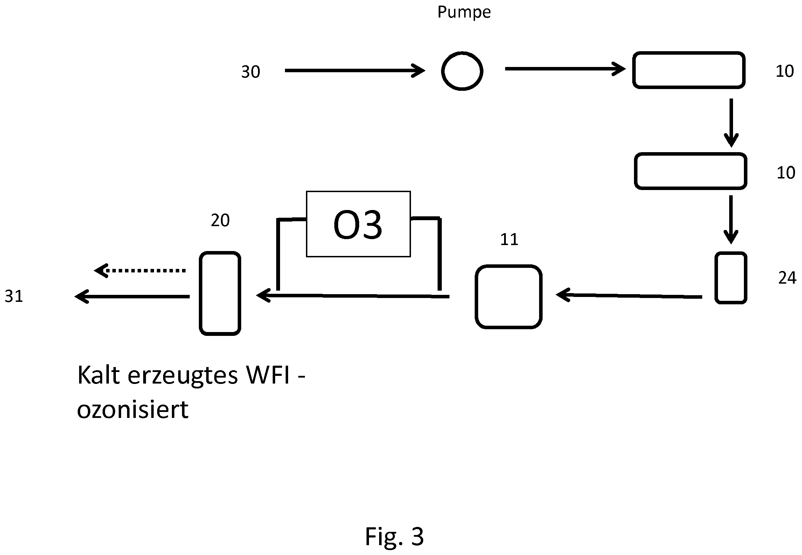

Die Fig. 2 und 3 zeigen eine Anordnung für das erfindungsgemäße Verfahren. Als Vorbehandlung 12 ist hier eine Enthärtung des Wassers vorgesehen, bei der eine Sole anfällt. Die Bereiche, die mit Ozon (O₃) beaufschlagt sind, sind mit gestrichelten Linien gekennzeichnet. In diesem Verfahren sind zwei Umkehrosmose-Einheiten 10 vorgesehen, so wie eine zusätzliche Membranentgasung 24. Man erkennt hier, dass das mit Ozon beaufschlagte Wasser teilweise zum Beginn des Verfahrens zurückgeführt wird.

Abschließend sei darauf hingewiesen, dass die hier dargestellten Ausführungsformen lediglich beispielhafte Verwirklichungen der Erfindung sind. Diese ist nicht darauf beschränkt. Vielmehr können die einzelnen Verfahrens schritte auch anders funktionieren bzw. anders zusammengestellt sein. So können auch mehr oder weniger UV-Einrichtungen vorgesehen sein. Es können auch mehrere Umkehrosmose-Einrichtungen oder Umkehrosmose-Stufen vorgesehen sein, beispielsweise zwei. Auch die genaue Anordnung der einzelnen Apparate und Geräte sowie die Anzahl der Entnahmestellen und das Vorhandensein weitere Probenentnahmestellen, um das Wasser zu testen, können variieren und sind hier nicht im Detail dargestellt.

## Patentansprüche

1. Verfahren zur Herstellung von pharmazeutisch nutzbaren Wassern (31), nämlich Wasser für Injektionszwecke (WFI),
wobei Wasser in Trinkwasserqualität (im Weiteren Speisewasser 30 genannt) wenigstens einer Umkehrosmose (10) und wenigstens einer Ultrafiltration (20) unterzogen wird, um das Speisewasser (30) aufzubereiten,
wobei nach der wenigstens einen Umkehrosmose (10) das Wasser einer Elektrodeionisation (11) unterzogen wird und dann in die Ultrafiltration (20) geleitet wird,
wobei vor der Umkehrosmose (10) eine Vorbehandlung (12) des Speisewassers (30) stattfindet, beispielsweise eine Enthärtung durch einen Ionenaustauscher
wobei die für die Ultrafiltration (20) verwendete Membran eine keramische Membran (21) ist
und wobei das Modul, in dem die Ultrafiltration (20) stattfindet, dauerhaft mit Ozon beaufschlagt wird
**dadurch gekennzeichnet,**
**dass** während der Produktion das mit Ozon beaufschlagte Wasser über die Ultrafiltration (20) in einen Vorratsbehälter (13) geführt wird, wobei ein Teilstrom vor die Anlage in die Vorbehandlung (12) des Speisewassers (30) in eine Ringleitung (14) zurück zirkuliert wird.

2. Verfahren nach Anspruch 1, **dadurch gekennzeichnet, dass** vor der Elektrodeionisation (11) eine Membranentgasung vorgesehen ist.

3. Verfahren nach einem der Ansprüche 1 bis 2, **dadurch gekennzeichnet, dass** auch Bereiche der Anlage vor der Durchführung der Ultrafiltration (20) mit Ozon beaufschlagt werden.

4. Verfahren nach einem der Ansprüche 1 bis 3, **dadurch gekennzeichnet, dass** vor der Umkehrosmose (10) und/oder vor der Vorbehandlung (12) eine UV-Einrichtung (22) vorgesehen ist, in der eine Bestrahlung des Wassers mit ultraviolettem Licht durchgeführt wird, um das Ozon zu zerstören.

5. Verfahren nach einem der Ansprüche 1 bis 4, **dadurch gekennzeichnet, dass** zwischen der Umkehrosmose (10) und der Elektrodeionisation (11) noch eine Membranentgasung (24) vorgesehen ist.

6. Verfahren nach einem der Ansrüche 1 bis 5, **dadurch gekennzeichnet, dass** auch der Vorratsbehälter (13) und/oder die Ringleitung (14) zumindest bereichswese mit Ozon beaufschlagt werden.

7. Verfahren nach einem der Ansrüche 1 bis 6, **dadurch gekennzeichnet, dass** an der Ringleitung (14) eine oder mehrere Entnahmestellen (15) für das pharmazeutisch nutzbare Wasser (31) existieren, in denen dieses einem oder mehreren Produktionsprozessen zugeführt werden kann, wobei vor der bzw. den Entnahmestellen (15) eine UV-Einrichtung (22) vorgesehen ist, in der eine Bestrahlung des behandelten Wassers mit ultraviolettem Licht durchgeführt wird, um das Ozon zu zerstören.

8. Verfahren nach einem der Ansprüche 1 bis 7, **dadurch gekennzeichnet, dass** während eines Produktionsstillstandes die Ringleitung (14) vollständig mit Ozon beaufschlagt wird und die vor der Entnahmestelle (15) befindliche UV-Einrichtung (22) abgeschaltet wird und das in der Ringleitung (14) befindliche pharmazeutisch nutzbare Wasser (31) im Kreislauf gefahren wird.

9. Verfahren nach einem der Ansprüche 1 bis 8, **dadurch gekennzeichnet, dass** während eines Produktionsstillstandes der Bereich der Anlage vor der Ultrafiltration (20) mit Ozon beaufschlagt wird und die vor der Umkehrosmose (10) befindliche UV-Einrichtung (22) nicht abgeschaltet wird und das in diesem Teil der Anlage befindliche Wasser im Kreislauf gefahren wird.

10. Verfahren nach einem der Ansprüche 1 bis 9, **dadurch gekennzeichnet, dass** nach der Ultrafiltration (20) an einer Probennahmestelle (23) eine schnelle Bestimmung der Anzahl von Mikroorganismen im pharmazeutisch nutzbaren Wasser (31) durchgeführt wird.

11. Vorrichtung zur Durchführung eines Verfahrens zur Herstellung von pharmazeutisch nutzbaren Wassern (31) nach einem oder mehreren der Ansprüche 1 bis 10, umfassend eine Einrichtung zur Vorbehandlung (12), wenigstens eine Umkehrosmose-Einrichtung (10) und mindestens eine Ultrafiltrationseinrichtung (20), eine Elektrodeionisation (11) sowie einen Vorratsbehälter (13) und eine Ringleitung (14), wobei die Membran der Ultrafiltrationseinrichtung (20) eine keramische Membran (21) ist, wobei die Ultrafiltrationseinrichtung (20) mit Ozon beaufschlagt ist.

## Claims

1. Method for the production of pharmaceutically usable water (31), namely water for injection purposes (WFI),
wherein water of drinking water quality (hereinafter referred to as potable water 30) is subjected to at least one reverse osmosis treatment (10) and at least one ultra filtration treatment (20) to treat the potable water (30),
wherein after the at least one reverse osmosis treatment (10) the water is subjected to electrode ionisation (11) and then passed to the ultra filtration treatment (20),
wherein a pre-treatment (12) of the potable water (30) takes place before the reverse osmosis (10), for example a softening by an ion exchanger,
wherein the membrane used for said ultra filtration (20) is a ceramic membrane (21)
and wherein the module in which the ultra filtration (20) takes place is permanently acted upon with ozone,
**characterised in that,**
during production, the water to which ozone is applied is fed via the ultra filtration treatment (20) into a reservoir (13), while a partial flow is being circulated back into a ring line (14) before the system for pre-treatment (12) of the potable water (30).

2. Method according to claim 1, **characterised in that** a membrane degassing is provided before the electrode ionisation treatment (11).

3. Method according to one of claims 1 to 2, **characterised in that** ozone is also applied to sections of the system before ultra filtration (20) is carried out.

4. Method according to any one of claims 1 to 3, **characterised in that** before reverse osmosis (10) and/or pre-treatment (12), a UV device (22) is provided in which irradiation of the water with ultraviolet light is carried out to destroy the ozone.

5. Method according to one of claims 1 to 4, **characterised in that** a membrane degassing (24) is also provided between the reverse osmosis (10) and the electrode ionisation (11).

6. Method according to one of claims 1 to 5, **characterised in that** the storage container (13) and/or the ring line (14) are also charged with ozone at least in some sections.

7. Method according to one of claims 1 to 6, **characterised in that** one or more tap points (15) for the pharmaceutically usable water (31) exist on the ring line (14) that can be used to supply this water to one or more production processes, wherein a UV device (22) is provided upstream of the tap points or at the tap points (15) used for treating the treated water with ultraviolet light in order to destroy the ozone.

8. Method according to one of claims 1 to 7, **characterised in that**, during a production stop, the ring line (14) is completely charged with ozone and the UV device (22) located upstream of the tap point (15) is switched off and the pharmaceutically usable water (31) located in the ring line (14) is circulated.

9. Method according to one of claims 1 to 8, **characterised in that**, during a production stop, the section of the system before ultra filtration (20) is acted upon with ozone and the UV device (22) located upstream to the reverse osmosis (10) is not switched off and the water located in this section of the system is circulated.

10. Method according to one of claims 1 to 9, **characterised in that**, after ultra filtration (20) at a sampling point (23), a rapid determination of the number of microorganisms in the pharmaceutically usable water (31) is carried out.

11. Apparatus for carrying out a process for the production of pharmaceutically usable waters (31) according to one or more of claims 1 to 10, comprising a device for pre-treatment (12), at least one reverse osmosis device (10) and at least one ultra filtration device (20), an electrode ionisation (11) as well as a reservoir (13) and a ring line (14), wherein the membrane of the ultra filtration device (20) is a ceramic membrane (21), wherein the ultra filtration device (20) is charged with ozone.

## Revendications

1. Procédé de fabrication d'eaux utilisables pharmaceutiquement (31), à savoir d'eaux pour injections (EPI),
sachant que l'eau ayant la qualité de l'eau potable (ci-après dénommée eau d'alimentation 30) est soumise au moins à une osmose inverse (10) et au moins à une ultrafiltration (20) dans le but de traiter l'eau d'alimentation (30),
sachant qu'en aval d'au moins un dispositif d'osmose inverse (10) l'eau est soumise à une électrodéionisation (11) puis est conduite au module d'ultrafiltration (20),
sachant qu'un prétraitement (12) de l'eau d'alimentation (30) a lieu en amont du dispositif d'osmose inverse (10), par exemple un adoucissement au passage dans un échangeur d'ions,
sachant que la membrane utilisée pour l'ultrafiltration (20) est une membrane en céramique (21)
et sachant que le module dans lequel l'ultrafiltration (20) a lieu est mis durablement sous pression d'ozone,
**caractérisé en ce que**
l'eau mise sous pression d'ozone pendant la production est conduite via le module d'ultrafiltration (20) vers un réservoir de stockage (13), sachant qu'en amont de l'installation un flux partiel est renvoyé, par une conduite annulaire (14), dans le dispositif de prétraitement (12) de l'eau d'alimentation (30).

2. Procédé selon la revendication 1, **caractérisé en ce qu'**en amont de l'électrodéionisation (11) est prévu un dispositif dégazeur membranaire.

3. Procédé selon l'une des revendications 1 ou 2, **caractérisé en ce que** des zones de l'installation sont mises sous pression d'ozone avant la réalisation de l'ultrafiltration (20).

4. Procédé selon l'une des revendications 1 à 3, **caractérisé en ce qu'**en amont du dispositif d'osmose inverse (10) et/ou en amont du dispositif de prétraitement (12) est prévu un dispositif à UV (22) dans lequel a lieu un traitement de l'eau par rayonnement de lumière ultraviolette afin de détruire l'ozone.

5. Procédé selon l'une des revendications 1 à 4, **caractérisé en ce qu'**entre les dispositifs d'osmose inverse (10) et d'électrodéionisation (11) est prévu en plus un dispositif dégazeur membranaire (24).

6. Procédé selon l'une des revendications 1 à 5, **caractérisé en ce que** le réservoir de stockage (13) et/ou la conduite annulaire (14) sont également mis sous pression d'ozone au moins localement.

7. Procédé selon l'une des revendications 1 à 6, **caractérisé en ce que** sont présents sur la conduite annulaire (14) un ou plusieurs points de prélèvement (15) de l'eau utilisable pharmaceutiquement (31), points auxquels cette eau peut être amenée à un ou plusieurs process de production, sachant qu'en amont du ou des point(s) de prélèvement (15) est prévu un dispositif à UV (22) dans lequel l'eau traitée est exposée à de la lumière ultraviolette pour détruire l'ozone.

8. Procédé selon l'une des revendications 1 à 7, **caractérisé en ce que** pendant un arrêt de production la conduite annulaire (14) est entièrement remplie d'ozone sous pression, **en ce que** le dispositif à UV (22) situé en amont du point de prélèvement (15) est éteint et **en ce que** l'eau utilisable pharmaceutiquement (31) présente dans la conduite annulaire (14) est mise à circuler en circuit fermé.

9. Procédé selon l'une des revendications 1 à 8, **caractérisé en ce que** pendant un arrêt de production la zone de l'installation située en amont du module d'ultrafiltration (20) est mise sous pression d'ozone, **en ce que** le dispositif à UV (22) situé en amont du dispositif d'osmose inverse (10) n'est pas éteint et **en ce que** l'eau présente dans cette partie de l'installation est mise à circuler en circuit fermé.

10. Procédé selon l'une des revendications 1 à 9, **caractérisé en ce qu'**en aval du module d'ultrafiltration (20), à un point de prélèvement d'échantillon (23), a lieu une détermination rapide du nombre de microorganismes présents dans l'eau utilisable pharmaceutiquement (31).

11. Dispositif de mise en oeuvre d'un procédé de fabrication d'eaux utilisables pharmaceutiquement (31) selon une ou plusieurs des revendications 1 à 10, comprenant un dispositif de prétraitement (12), au moins un dispositif d'osmose inverse (10) et au moins un module d'ultrafiltration (20), un dispositif d'électrodéionisation (11) ainsi qu'un réservoir de stockage (13) et une conduite annulaire (14), sachant que la membrane du module d'ultrafiltration (20) est une membrane en céramique (21), sachant que le module d'ultrafiltration (20) est mis sous pression d'ozone.
